# EUROPÄISCHE PATENTSCHRIFT

(11) **EP 0 982 494 B1**
(45) Veröffentlichungstag und Bekanntmachung des Hinweises auf die Patenterteilung: **06.05.2004**
(21) Anmeldenummer: 99110264.1
(22) Anmeldetag: 27.05.1999
(51) Int. Cl.: F02M 67/02, F02M 67/06, F02M 69/08

(54) **Brennstoffzuführsystem für eine fremdgezündete Brennkraftmaschine**
Fuel supply system for a spark ignition engine
Système d'alimentation en carburant d'un moteur à allumage commandé

(30) Priorität: 27.08.1998 DE 19838843
(43) Veröffentlichungstag der Anmeldung: 01.03.2000
(73) Patentinhaber: DaimlerChrysler AG, 70567 Stuttgart (DE)
(72) Erfinder: Betsch, Jochen Dr., 71334 Waiblingen (DE); Kaden, Arnold, 73630 Remshalden (DE)

(56) Entgegenhaltungen:
- WO-A-99/58846
- DE-A- 19 945 544
- US-A- 4 614 175
- US-A- 4 628 888
- PATENT ABSTRACTS OF JAPAN vol. 006, no. 167 (M-153), 31. August 1982 (1982-08-31) & JP 57 081115 A (TAGA KIICHI), 21. Mai 1982 (1982-05-21)
- PATENT ABSTRACTS OF JAPAN vol. 1996, no. 05, 31. Mai 1996 (1996-05-31) & JP 08 004600 A (MITSUBISHI HEAVY IND LTD), 9. Januar 1996 (1996-01-09)

## Beschreibung

### Stand der Technik

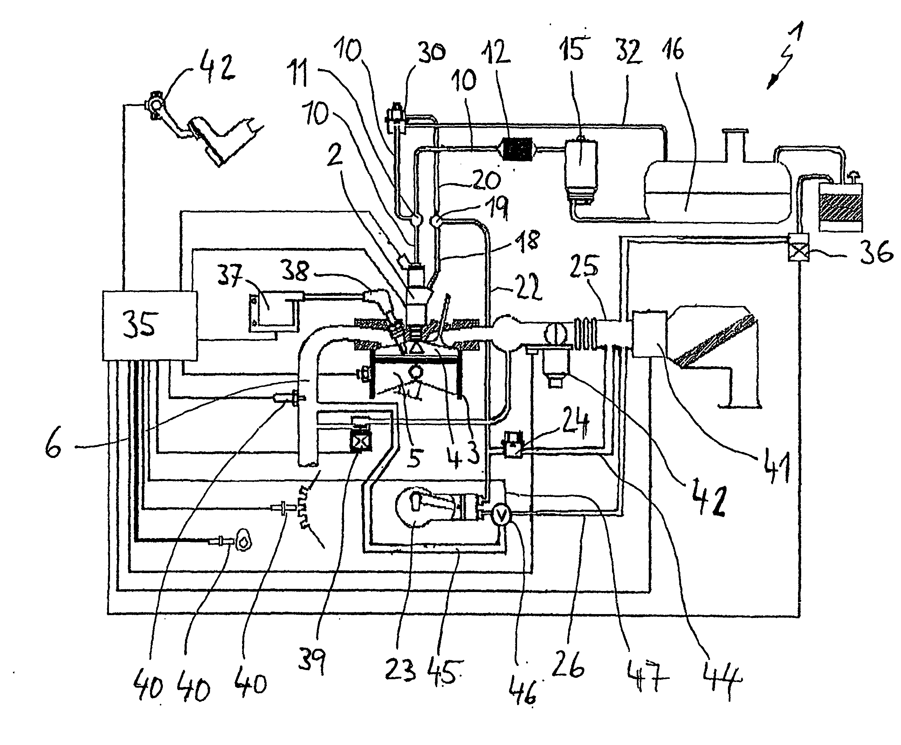

Die Erfindung betrifft ein Brennstoffzuführsystem für eine fremdgezündete Brennkraftmaschine nach der Gattung des Anspruchs 1. Es ist bereits ein Brennstoffzuführsystem bekannt(EP 0 308 467 B1), das ein Einblaseventil besitzt, zu dem sowohl Brennstoff über eine Brennstoffleitung als auch Luft über eine Luftzuführleitung unter Druck geführt wird. Der Brennstoff wird bei dem bekannten luftunterstützten Einspritz- bzw. Einblasesystem in eine innerhalb des Einblaseventils vorgesehene Gemischbildungskammer mit Hilfe eines Einspritzventils eingespritzt und dort anschließend mit komprimierter Luft aufbereitet und teilweise verdampft, um dann als Brennstoff-Luft-Gemisch mit relativ niedrigem Druck von beispielsweise 7 bis 8 bar direkt in die Brennkammer geblasen zu werden. Hierzu ist ein Verdichter erforderlich, der die verdichtete Luft zum Beispiel über ein die einzelnen Einblaseventile miteinander verbindendes Sammelrohr (air-rail) in die Luftzuführleitung zu jedem einzelnen Einblaseventil liefert. In Figur 7 auf Seite 4 des SAE-Papers 98P-136, 1988, Rodney Houston, Geoffrey Cathcart, Orbital Engine Company, Perth, Western Australia, Combustion and Emissions Characteristics of Orbital's Combustion Process Applied to Multi-Cylinder Automotive Direct Injected 4-Stroke Engines", Seiten 1 - 12, ist ein derartiges Einblasesystem offenbart.

In der Kaltstartphase der Brennkraftmaschine kommt es aufgrund der Verwendung von vom Verdichter angesaugter kalter Frischluft erst nach einer gewissen Zeitverzögerung zu einer guten Aufbereitung in der Gemischbildungskammer des Einblaseventils, bei der zumindest teilweise eine Verdampfung des Brennstoffs in der Gemischbildungskammer erfolgt. Dies hat zur Folge, daß es beim Kaltstart der Brennkraftmaschine zu einer Erhöhung der schädlichen Bestandteile im Abgas kommt.

Aus der JP 57081115 A ist ferner ein Brennstoffzuführsystem bekannt, bei dem Brennstoff von einer Kraftstoffpumpe mit verdichtetem Abgas aus dem Brennraum in einem Mischapparat gemischt wird, um dieses dann als Abgas-Brennstoff-Gemisch anschließend weiter zu verdichten und über ein Ventil abzugeben. Eine Verdichtung von Luft lediglich mit vermischtem Abgas ohne Brennstoff in einem Verdichter erfolgt nicht.

### Vorteile der Erfindung

Das erfindungsgemäße Brennstoffzuführsystem für eine fremdgezündete Brennkraftmaschine mit den kennzeichnenden Merkmalen des Anspruchs 1 hat demgegenüber den Vorteil, daß eine verbesserte Aufbereitung des vom Einblaseventil ausgeblasenen Brennstoff-Medium-Gemisches, insbesondere bei einem Kaltstart der Brennkraftmaschine, erfolgt. Außerdem kann in vorteilhafter Weise die Verdampfung in der Gemischbildungskammer des Einblaseventils und damit die Einspritzcharakteristik des Einblaseventils gezielt beeinflußt werden.

Von Vorteil ist des weiteren, daß durch die Verwendung von Abgas bzw. einer Mischung von Abgas und Luft als gasförmiges Medium für das Einblaseventil eine Beeinflussung der Strahlöffnungscharakteristik und des Sprühkegels des Einblaseventils möglich ist.

Besonders vorteilhaft ist, daß, insbesondere bei einem Kaltstart der Brennkraftmaschine, durch die Verwendung von heißem Abgas bzw. mit Luft gemischtem Abgas als gasförmiges Medium für die Einblaseventile, sehr schnell eine Aufheizung der Gemischbildungskammer des Einblaseventils erfolgt, wodurch die Schadstoffbildung im Abgas der Brennkraftmaschine positiv beeinflußt werden kann.

Von besonderem Vorteil ist ferner, daß nur eine kurze Zeitspanne erforderlich ist, um eine erstmalige Gemischausblasung mit den Einblaseventilen durchführen zu können, so daß beim Start der Brennkraftmaschine nur sehr geringe Abgasemissionen auftreten. Vorteilhafterweise ergibt sich damit auch ein verringerter Brennstoffverbrauch der Brennkraftmaschine.

Durch die in den Unteransprüchen aufgeführten Maßnahmen sind vorteilhafte Weiterbildungen und Verbesserungen des im Anspruch 1 angegebenen Brennstoffzuführsystems möglich.

### Zeichnung

Ein Ausführungsbeispiel der Erfindung ist in der Zeichnung vereinfacht dargestellt und in der nachfolgenden Beschreibung näher erläutert.

### Beschreibung des Ausführungsbeispiels

In der Zeichnung ist in schematisch vereinfachter Darstellungsweise ein Schaltbild der Komponenten eines Brennstoffzuführsystems 1 gezeigt. Das Brennstoffzuführsystem 1 ist für eine fremdgezündete Brennkraftmaschine vorgesehen und besitzt zumindest ein Einblaseventil 2. Das Einblaseventil 2 verfügt über eine Gemischbildungskammer oder einen Gemischbildungsbereich, in welchem Brennstoff und ein gasförmiges Medium unter Druck gemischt werden, um so den Brennstoff teilweise zu verdampfen, so daß zur anschließenden Verbrennung ein gut aufbereitetes Brennstoff-Medium-Gemisch aus einer Austrittsöffnung des Einblaseventils 2 direkt in einen Brennraum 4 eines Zylinders 3 einer Brennkraftmaschine austreten kann. In dem Zylinder 3 ist in bekannter Weise ein Kolben 5 bewegbar untergebracht. Bei dem gasförmigen Medium kann es sich um Luft oder um Luft mit vermischtem Abgas oder vollständig um Abgas handeln, das durch Verbrennung im Brennraum 4 entsteht. Es liegt somit eine Brennkraftmaschine mit innerer Gemischbildung in Verbindung mit einem luftunterstützten Einspritzsystem vor. Der Aufbau und die Betriebsweise derartiger Einblaseventile 2 sind dem Fachmann zum Beispiel aus dem in der Einleitung genannten SAE-Paper 98P-136, Seite 10, Figur 21 hinreichend bekannt. Ergänzend weisen wir auf die Veröffentlichungen EP 0 242 370 B1, EP 0 308 467 B1 und EP 0 494 468 B1 hin, die beispielhaft derartige Einblaseventile 2 zeigen.

Das Einblaseventil 2 ist über eine Brennstoffleitung 10 beispielsweise über ein Brennstoffsammelrohr 11 (fuel-rail), einem Brennstoffilter 12 und einer Brennstoffpumpe 15 an einem Brennstofftank 16 angeschlossen. Des weiteren ist das Einblaseventil 2 an ein System zur Zufuhr des gasförmigen Mediums, das sich aus einer Zuführleitung 18, einem Sammelrohr 19 (air-rail) und einer Verdichterleitung 22 mit einem Verdichter 23 zusammensetzt, angeschlossen.

Von dem Sammelrohr 19 führt des weiteren eine Steuerleitung 20 zu einem Druckregelventil 30. Das Druckregelventil 30 besitzt zum Beispiel eine federbelastete Membran, um die an das Druckregelventil 30 angeschlossene Brennstoffleitung 10 über beispielsweise einen an der Membran angebrachten Schließkörper abhängig vom Differenzdruck in der Steuerleitung 20 regeln zu können, so daß mehr oder weniger Brennstoff über die Brennstoffleitung 10 in eine am Druckregelventil 30 angeschlossene Tankrücklaufleitung 32 abfließen kann. Die Brennstoffleitung 10 führt vom Druckregelventil 30 zu dem Brennstoffsammelrohr 11 und von diesem weiter über die Brennstoffleitung 10 zum Einblaseventil 2. Der Druckaufbau wird von der in das Brennstoffsammelrohr 11 fördernden Brennstoffpumpe 15 bewerkstelligt.

Selbstverständlich ist es auch möglich, anstelle der Sammelrohre 11 und 19 entsprechende Einzelleitungen für zum Beispiel vier Einblaseventile 2 vorzusehen, um diese mit Brennstoff und gasförmigem Medium versorgen zu können.

Über ein elektronisches Steuergerät 35 erfolgt die Steuerung des Einblaseventils 2 und der weiteren Komponenten des Brennstoffzuführsystems 1, wie zum Beispiel Tankentlüftungsventil 36, Zündsystem 37 mit Zündkerzen 38, Abgasrückführventil 39, Sensoren 40, Luftmassenmesser 41 und elektronische Motorleistungssteuerung (Egas) 42.

Die Verdichterleitung 22 führt zu dem Verdichter 23, der ein gasförmiges Medium ansaugt und dieses auf beispielsweise etwa 6,5 bar verdichtet. Bei dem gasförmigen Medium kann es sich um Luft oder um Luft mit vermischtem Abgas oder ausschließlich um Abgas handeln. Erfindungsgemäß ist vorgesehen, daß die vom Verdichter 23 zur Verdichtung angesaugte Luft mit Abgas vermischt wird. Das heiße Abgas kann über eine Abgasleitung 45, beispielsweise stromauf des Abgasrückführventils 39, aus einem Abgaskanal 6 eines Zylinders 3 der Brennkraftmaschine entnommen werden. Selbstverständlich können bei mehrzylindrigen Brennkraftmaschinen nur eine Teilanzahl der Abgaskanäle der Zylinder oder auch alle Abgaskanäle der Zylinder zur Zufuhr von Abgas zum Verdichter 23 über eine oder mehrere Abgasleitungen 45 benutzt werden. Die zur Mischung erforderliche Luft stammt zum Beispiel aus dem Drosselklappenstutzen 25, die über eine Drosselstutzenleitung 26 einem Mischventil 46 zugeführt wird. Das Mischventil 46 ist ansaugseitig mit dem Verdichter 23 verbunden. Die über die Abgasleitung 45 zugeführten Abgase werden vom Mischventil 46 mit der zum Beispiel aus dem Drosselklappenstutzen 25 stammenden Luft vermischt. Das Mischventil 46 ist hierzu beispielsweise elektromagnetisch ausgebildet und über eine elektrische Leitung 47 mit dem elektronischen Steuergerät 35 verbunden. Mittels des elektronischen Steuergerätes 35 kann dann eine Regelung des zu den Einblaseventilen 2 zugeführten gasförmigen Mediums abhängig von Betriebsparametern der Brennkraftmaschine durchgeführt werden. Durch die Verwendung von heißem Abgas bzw. mit Luft gemischtem Abgas als gasförmiges Medium für die Einblaseventile 2 der Brennkraftmaschine, das über den Verdichter 23 und die Verdichterleitung 22 den Einblaseventilen 2 zugeführt wird, kommt es zu einer raschen Aufheizung in den Gemischbildungskammern der Einblaseventile 2. Dies hat zu Folge, daß es zu einer nahezu vollständigen Verdampfung des in die Gemischbildungskammern eingebrachten Brennstoffs kommt, wodurch sich insbesondere beim Kaltstart die Schadstoffbildung im Abgas der Brennkraftmaschine positiv beeinflussen läßt.

Durch eine beispielsweise stufenlos ausgebildete Regelung der Mischung von Abgas und Luft im Mischventil 46 kann beispielsweise neben der vorgesehenen Kaltstartphase der Brennkraftmaschine auch Abgas bei höheren Motorlastzuständen über den Verdichter 23 zugeführt werden, so daß eine bisher übliche Abgasrückführung mittels Abgasrückführventil 39 entfallen kann.

Es ist aber auch möglich, das Mischventil 46 als Schaltventil auszubilden, das zum Beispiel über zwei Schaltstufen verfügt. Das Schaltventil wird beim Kaltstart der Brennkraftmaschine so geschaltet, daß lediglich Abgas ohne Luft vom Verdichter 23 zur Verdichtung angesaugt wird. Nach einer gewissen Zeitdauer kann dann durch Schalten des Schaltventils wieder auf die herkömmliche Luftansaugung ohne Abgas umgestellt werden.

Des weiteren ist in der Verdichterleitung 22 ein Druckbegrenzungsventil 24 verbaut, daß zur Einhaltung eines möglichst gleichbleibenden Verdichterlieferdrucks vorgesehen ist. Bei zu hohem Verdichterlieferdruck öffnet das Druckbegrenzungsventil 24, so daß das vom Verdichter 23 verdichtete Medium über eine Absteuerleitung 44 beispielsweise in den Drosselklappenstutzen 25 eingeleitet wird.

## Patentansprüche

1. Brennstoffzuführsystem für eine fremdgezündete Brennkraftmaschine, mit zumindest einem Einblaseventil zur Gemischbildung in einem Brennraum, welchem Brennstoff über eine Brennstoffleitung (10) und über eine Zuführleitung (18) gasförmiges Medium zugeführt wird, das von einem Verdichter unter Druck zum zumindest einen Einblaseventil gefördert wird, wobei der Verdichter (23) Luft mit vermischtem Abgas ansaugt und als gasförmiges Medium unter Druck zu dem zumindest einen Einblaseventil (2) fördert, **dadurch gekennzeichnet, daß** ein Mischventil (46) zur Mischung der vom Verdichter (23) angesaugten Luft und des Abgases vorgesehen ist.

2. Brennstoffzuführsystem nach Anspruch 1, **dadurch gekennzeichnet, daß** das Mischventil (46) elektromagnetisch betätigbar ausgebildet ist.

3. Brennstoffzuführsystem nach Anspruch 1 oder 2, **dadurch gekennzeichnet, daß** das Mischventil (46) als Schaltventil ausgebildet ist.

4. Brennstoffzuführsystem nach Anspruch 2 oder 3, **dadurch gekennzeichnet, daß** ein elektronisches Steuergerät (35) das Mischventil (46) ansteuert.

5. Brennstoffzuführsystem nach Anspruch 1, **dadurch gekennzeichnet, daß** das Mischventil (46) über eine Abgasleitung (45) an einen Abgaskanal (6) zumindest eines Zylinders (3) der Brennkraftmaschine angeschlossen ist.

6. Brennstoffzuführsystem nach Anspruch 1, **dadurch gekennzeichnet, daß** das Mischventil (46) über eine Ansaugleitung (26) an einen Drosselklappenstutzen (25) der Brennkraftmaschine angeschlossen ist.

7. Brennstoffzuführsystem nach Anspruch 1, **dadurch gekennzeichnet, daß** die mit dem Mischventil (46) bereitgestellte Mischung von Abgas und Luft für den Verdichter (23) auf die Kaltstartphase der Brennkraftmaschine beschränkt ist, wonach anschließend an die Kaltstartphase mittels des Mischventils (46) auf eine Luftzufuhr zu dem Verdichter (23) umgestellt wird.

8. Brennstoffzuführsystem nach Anspruch 4, **dadurch gekennzeichnet, daß** die mit dem Mischventil (46) bereitgestellte Mischung von Abgas und Luft abhängig von Betriebsparametern der Brennkraftmaschine eingestellt und vom elektronischen Steuergerät (35) gesteuert wird.

9. Brennstoffzuführsystem nach Anspruch 4 oder 7, **dadurch gekennzeichnet, daß** das Mischventil (46) so gesteuert wird, daß das vom Verdichter (23) angesaugte gasförmige Medium lediglich aus Abgas besteht.

## Claims

1. Fuel delivery system for a spark ignition engine, with at least one injection valve for forming a mixture in a combustion chamber, to which fuel is delivered via a fuel line (10) and a gaseous medium is fed under pressure via a delivery line (18) from a compressor to at least one injection valve, in which the compression (23) sucks in air admixed with exhaust gas and feeds it as a gaseous medium under pressure to the at least one injection valve (2), **characterised in that** a mixing valve (46) is provided for mixing the air admitted to the compressor (23) and the exhaust gas.

2. Fuel delivery system as claimed in claim 1, **characterised in that** the mixing valve (46) can be electromagnetically operated.

3. Fuel delivery system as claimed in claim 1 or 2, **characterised in that** the mixing valve (46) is a control valve.

4. Fuel delivery system as claimed in claim 2 or 3, **characterised in that** an electronic control device (35) actuates the mixing valve (46).

5. Fuel delivery system as claimed in claim 1, **characterised in that** the mixing valve (46) is connected to the internal combustion engine via an exhaust gas line (45) and an exhaust gas passage (6) of at least one cylinder (3) of the internal combustion engine.

6. Fuel delivery system as claimed in claim 1, **characterised in that** the mixing valve (46) is connected via an intake line (26) to a throttle valve connector (25) of the internal combustion engine.

7. Fuel delivery system as claimed in claim 1, **characterised in that** the mixture of exhaust gas and air prepared by the mixing valve (46) for the compressor (23) is limited to the cold-start phase of the internal combustion engine and after the cold-start phase, a switch is made by means of the mixing valve (46) so that air is delivered to the compressor (23).

8. Fuel delivery system as claimed in claim 4, **characterised in that** the mixture of exhaust gas and air prepared by the mixing valve (46) is set depending on operating parameters of the internal combustion engine and controlled by the electronic control device (35).

9. Fuel delivery system as claimed in claim 4 or 7, **characterised in that** the mixing valve (46) is controlled so that the gaseous medium taken in by the compressor (23) consists of exhaust gas only.

## Revendications

1. Système d'alimentation en carburant d'un moteur à combustion interne à allumage commandé, comportant au moins une soupape d'injection pour la formation du mélange dans une chambre de combustion à laquelle est alimenté un carburant via une conduite à carburant (10) et un fluide gazeux via une conduite d'alimentation (18), ledit fluide étant convoyé sous pression par un compresseur jusqu'à ladite au moins une soupape d'injection, le compresseur (23) aspirant de l'air mélangé avec des gaz d'échappement et le convoyant sous forme de fluide gazeux sous pression jusqu'à ladite au moins une soupape d'injection (2), **caractérisé en ce qu'**il est prévu une soupape de mélange (46) pour mélanger l'air aspiré par le compresseur (23) et les gaz d'échappement.

2. Système d'alimentation en carburant selon la revendication 1, **caractérisé en ce que** la soupape de mélange (46) est réalisée avec actionnement électromagnétique.

3. Système d'alimentation en carburant selon l'une ou l'autre des revendications 1 et 2, **caractérisé en ce que** la soupape de mélange (46) est réalisée sous forme de soupape de commutation.

4. Système d'alimentation en carburant selon l'une ou l'autre des revendications 2 et 3, **caractérisé en ce qu'**un appareil de commande électronique (35) pilote la soupape de mélange (46).

5. Système d'alimentation en carburant selon la revendication 1, **caractérisé en ce que** la soupape de mélange (46) est raccordée via une conduite à gaz d'échappement (45) à un canal à gaz d'échappement (6) d'au moins un cylindre (3) du moteur à combustion interne.

6. Système d'alimentation en carburant selon la revendication 1, **caractérisé en ce que** la soupape de mélange (46) est raccordée via une conduite d'aspiration (26) à une tubulure de papillon de gaz (25) du moteur à combustion interne.

7. Système d'alimentation en carburant selon la revendication 1, **caractérisé en ce que** le mélange de gaz d'échappement et d'air préparé par la soupape de mélange (46) et destiné au compresseur (23) est restreint à la phase de démarrage à froid du moteur à combustion interne, suite à quoi, à la suite de la phase de démarrage à froid, la soupape de mélange (46) est commutée pour passer à une alimentation en air vers le compresseur (23).

8. Système d'alimentation en carburant selon la revendication 4, **caractérisé en ce que** le mélange de gaz d'échappement et d'air préparé par la soupape de mélange (46) est réglé en fonction des paramètres de fonctionnement du moteur à combustion interne et est commandé par l'appareil de commande électronique (35).

9. Système d'alimentation en carburant selon l'une ou l'autre des revendications 4 et 7, **caractérisé en ce que** la soupape de mélange (46) est commandée de telle sorte que le fluide gazeux aspiré par le compresseur (23) n'est constitué que de gaz d'échappement.
